# EUROPEAN PATENT SPECIFICATION

(11) **EP 2 762 784 B1**
(45) Date of publication and mention of the grant of the patent: **03.02.2016**
(21) Application number: 12195066.1
(22) Date of filing: 30.11.2012
(51) Int. Cl.: F23R 3/00, F23M 20/00

(54) **Damping device for a gas turbine combustor**
Dämpfvorrichtung für eine Gasturbinenbrennkammer
Dispositif d'amortissement pour chambre de combustion de turbine à gaz

(43) Date of publication of application: 06.08.2014
(73) Proprietor: ALSTOM Technology Ltd, 5400 Baden (CH)
(72) Inventor: Maurer, Michael, 79713 Bad Säckingen (DE); Benz, Urs, 5073 Gipf-Oberfrick (CH); Bothien, Mirko Ruben, 8037 Zürich (CH)
(74) Representative: Pesce, Michele

(56) References cited:
- EP-A1- 2 295 864
- EP-A1- 2 362 147
- US-A1- 2005 034 918
- US-A1- 2012 006 028

## Description

### Technical Field

The present invention relates to the field of gas turbines, in particular to lean premixed, low emission combustion systems having one or more devices to suppress thermo-acoustically induced pressure oscillations in the high frequency range, which have to be properly cooled to ensure a well-defined damping performance and a sufficient lifetime.

### Background of the Invention

A drawback of lean premixed, low emission combustion systems in gas turbines is that they exhibit an increased risk in generating thermo-acoustically induced combustion oscillations. Such oscillations, which have been a well-known problem since the early days of gas turbine development, are due to the strong coupling between fluctuations of heat release rate and pressure and can cause mechanical and thermal damages and limit the operating regime.

A possibility to suppress such oscillations consists in attaching damping devices, such as quarter wave tubes, Helmholtz dampers or acoustic screens.

A reheat combustion system for a gas turbine with sequential combustion including an acoustic screen is described in the document US 2005/229581 A1. The acoustic screen, which is provided inside the mixing zone and/or the combustion chamber, consists of two perforated walls. The volume between both can be seen as multiple integrated Helmholtz volumes. The backward perforated plate allows an impingement cooling of the plate facing the hot combustion chamber.

To prevent hot gases to enter from the combustion chamber into the damping volume, an impingement cooling mass flow is required, which decreases the damping efficiency. If the impingement mass flow is too small, the hot gases recirculate passing through the adjacent holes of the acoustic screen. This phenomenon is known as hot gas ingestion. In case of hot gas ingestion the temperature rises in the damping volume. This leads to an increase of the speed of sound and finally to a shift of the frequency, for which the damping system has been designed. The frequency shift can lead to a strong decrease in damping efficiency. In addition, as the hot gas recirculates in the damping volume, the cooling efficiency is decreased, which can lead to thermal damage of the damping device. Moreover, using a high cooling mass flow, increases the amount of air, which does not take part in the combustion. This results in a higher firing temperature and thus leads to an increase of the NOx emissions.

A solution to the mentioned issues is described, for example, in the document EP 2295864. Here, a multitude of layers are braced together to form single compact Helmholtz dampers, which are cooled using an internal near-wall cooling technique close to the hot combustion chamber. Therefore, the cooling mass flow can be drastically reduced without facing the problem of hot gas ingestion, leading to less emissions and a higher damping efficiency. As single Helmholtz dampers are used, different frequencies can be addressed separately. Whether single or a cluster of Helmholtz dampers is used, the design is based on an appropriate implementation of a near wall cooling.

Another solution of a high-frequency damping system for a combustor in a gas turbine with a cooled wall part is disclosed in EP 2402658. A plurality of cooling paths extending in axial direction are formed in the combustor wall. The cooling paths are connected to a source of cooling medium, such as steam or cooling air, at the one end and to a cooling medium discharge channel at the other end. The cooling medium flowing through the cooling paths cools the peripheral portions of the through holes to avoid or minimize thermal stress, caused by the hot combustion gases when passing the through holes in case of hot gas ingestion.

The document EP 2362147 describes various solutions on how the near-wall cooling can be realized. The near-wall cooling passages are either straight passages or show coil shaped structures parallel to the laminated plates. A drawback of this solution is that due to the shape of the near wall cooling channels, the component is to be made from several layers, which in the end have to be brazed together. Brazing itself is a well-known technique in the turbo machinery business, but inherits disadvantages while compared to other joining methods.

Another way to realize different shapes of near wall cooling channels in wall structures would be to use a so-called "lost wax casting process". With this technique, which is widely used to manufacture cooling passages in turbine blades, a ceramic core is used during the casting process to realize the later cooling channels. Compared to casting processes that can avoid the usage of ceramic cores, the production costs are multiple times higher.

### Summary of the Invention

It is an object of the present invention is to provide a near wall cooling system for a damping device of a gas turbine combustor with significantly reduced cooling air mass flow requirements, which eliminates the drawbacks of expensive casting techniques.

This object is obtained by a damping device for a gas turbine combustor according to claim 1.

The damping device for a gas turbine combustor, which is especially a damping device for a liner segment with a near wall cooling system, comprises a wall with a first inner wall, particularly the liner, and a second outer wall, arranged in a distance to each other, wherein said inner wall is subjected to high temperatures on a side with a hot gas flow, a plurality of cooling channels extending essentially parallel between the first inner wall and the second outer wall, and at least one damping volume bordered by said cooling channels, a first passage for supplying a cooling medium from a cooling channel into the damping volume and a second passage for connecting the damping volume to the combustion chamber, wherein an end plate is fixed to the inner wall, separating the damping volume from the combustion chamber, said end plate is provided with the neck passage and is additionally provided with at least one feed plenum for a cooling medium, at least one exit plenum for a cooling medium and at least one cooling passage enabling a flow of cooling medium from the at least one feed plenum to another feed plenum or to the at least one exit plenum.

The cooling passages between said plena act as near wall cooling channels.

According to a preferred embodiment the lateral edges of the end plate are provided with recesses. When connected to the inner wall, these recesses form the feed and exit plena.

The new invention enables an optimized cooling and lifetime performance of high frequency damping systems with reduced cooling air mass flow requirements. The described manufacturing process uses machining and welding techniques and, therefore, eliminates the said drawbacks of brazing and/or expensive casting techniques using ceramic cores. The novel near wall cooling design enables an efficient damping and reduces the manufacturing risks.

Usually, high-frequency dampers in can combustion systems are mounted around the circumference of the can liner with a limited extent in axial direction. If a near-wall cooling damper scheme is mounted in this way, difficulties in the manufacturing process arise because the bending process might influence the cooling channel geometries and thus cause a non-uniform cooling distribution. By arranging the near-wall damper volumes in axial direction these difficulties are overcome.

### Brief Description of the Drawings

The present invention is now to be explained more closely by means of different embodiments and with reference to the drawings.
- Fig. 1: shows a schematic view of a reheat combustor of a gas turbine;
- Fig. 2: shows a cross-section of the combustion chamber wall;
- Fig. 3: shows an enlarged view of the damping device according to the invention;
- Fig. 4-6: show in more detail embodiments of an end plate for a damping device according to the invention.

### Detailed Description of Different Embodiments of the Invention

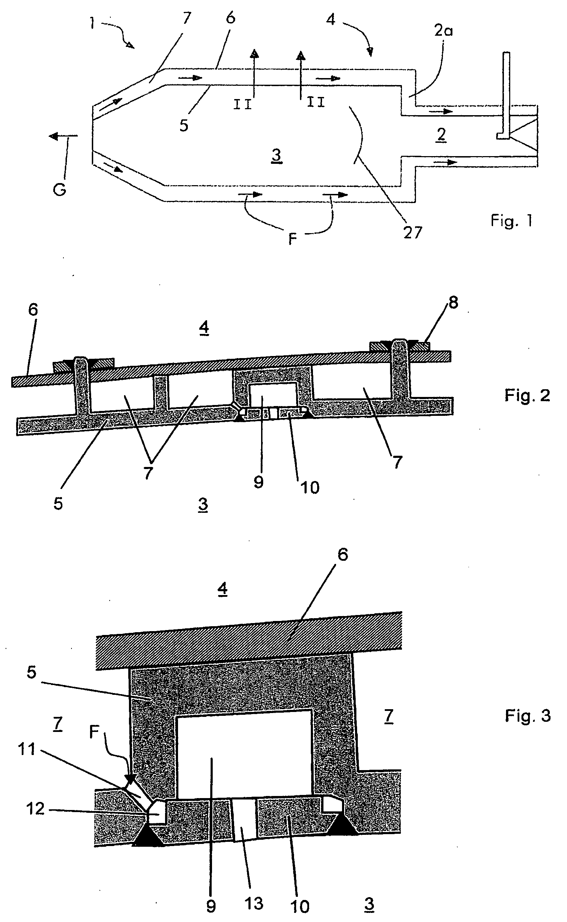

Figure 1 shows a reheat combustor 1 of a gas turbine with sequential combustion according to the state of the art. The combustor 1 comprises a burner section 2, axially connected to a combustion chamber 3. The hot gas flow entering the burner section 2 is fed with fuel by means of fuel supply injectors (e.g. fuel lances), extending into the hot gas flow, and then flowing along a mixing zone. The mixture, formed in the mixing zone, leaves the burner section 2 at its exit to expand into the combustion chamber 3. In the combustion chamber 3 the mixture is combusted in a flame 27, generating hot gases G that are expanded in a turbine (not shown).

The interface between the burner section 2 and the combustion chamber 3 is characterized by a regularly sudden cross-sectional area change comprising a perpendicular front plate 2a, extending from the exit of the burner section 2 to the peripheral wall of the combustion chamber 3. At least a portion 4 of the combustor walls, including the burner section 2 and/or the combustion chamber 3 and/or the front plate 2a, are equipped with cooling means. For example, the combustor walls as a whole or any portions of the burner section 2 and/or the combustion chamber 3 and/or the front plate 2a comprise an inner liner 5 and, in a distance thereof, an outer cover plate 6, inner liner 5 and outer cover plate 6 defining an interposed cooling chamber. A cooling medium, such as air or steam, circulates through cooling channels 7 in this cooling chamber (as indicated by arrows F), thereby cooling the burner section 2, the combustion chamber 3 and the front plate 2a.

Figure 2 is a cross section of the combustion chamber wall, showing the liner 5 and the cover plate 6, which define the channels 7 for the cooling medium. The cover plate 6 is joined with the liner 5 by using fixation clips 8, which are welded onto pins that extend from the liner surface. Webs on the outer side of the liner 5 act as sidewalls of the cooling channels 7 and support the wall structure 5,6. In the distance between inner liner 5 and cover plate 6 the acoustic damping devices are located. The damping volume 9 is bordered by the cooling channels 7. Towards the combustion chamber 3 the damping volume 9 is separated by an end plate 10, as described below.

The advantage of this design is that the outer shape of the acoustic damper can be incorporated in the casting process of the liner 5. To define the needed acoustic volume 9 and to close the damping device, a machined end plate 10 is welded onto the liner 5 covering the molded-in recess. The end plate 10 is equipped with at least one through-hole 13, the neck passage for the interaction between the combustion chamber 3 and the damping volume 9.

Figure 3 illustrates in an enlarged picture the principle structure of a damping device according to the present invention. The liner components 5 of the combustor 1 are regularly manufactured by casting. In the process of casting a number of recesses 9 is molded in the liner 5. In a following step these recesses 9 are covered by welding an end plate 10 on every recess 9. The volume, bounded by the recessed liner 5 and the end plate 10, forms the damping volume 9 of the damping device. At least one acoustic neck passage 13 is incorporated into the end plate 10 which connects the combustion chamber 3 with the acoustic damper volume 9.

The outer portions of the recessed liner 5 are charged with the cooling medium F, flowing through the cooling channels 7 and therefore are properly cooled. But as the damping device mainly consists of a damping volume 9, which has little or no purge air supply from the cooling circuit 7, the wall temperatures between the damping volume 9 and the combustion chamber 3 would outrun the material limits. As a consequence, an additional cooling means has to be incorporated in the end plate 10. One alternative for cooling this component is a near-wall cooling means.

To realize a near-wall cooling solution for a damping device according to the invention, a first passage 11 is established in liner 5. This passage 11 is connected to a cooling channel 7 at one end. And at the other end this passage 11 is connected to a first feed plenum 12 so that the cooling medium F can flow through passage 11 and supply cooling medium F from the cooling channel 7 into this plenum 12. This first plenum 12 is disposed between the liner 5 and the end plate 10. According to a preferred embodiment the plenum 12 is located in the end plate 10. In the region of its lateral edges a recess is milled into the end plate 10. When connected to the liner 5, these recesses form plenum 12. And this plenum 12 is the starting point of the near wall cooling system of the inventive damping device.

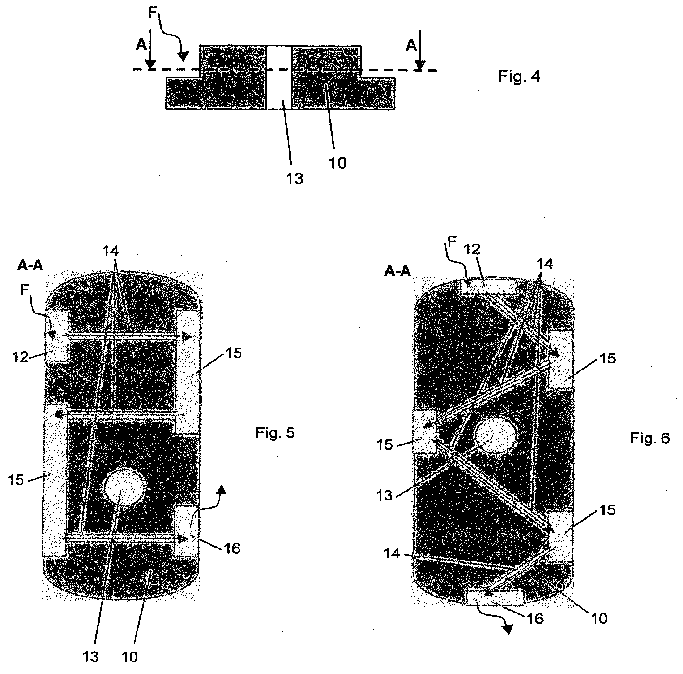

Figures 4, 5 and 6 show in more detail different embodiments of the design of the end plate 10.

As can be seen from Figure 5, the cooling supply stream F enters the near-wall cooling device through the first feed plenum 12. From this first feed plenum 12 a second passage 14 leads the cooling air into a second feed plenum 15. This principle is repeated until the second passage 14 reaches the exit plenum 16. At this position the cooling supply stream F exits the end plate 10 either into the acoustic volume 9 to provide some purge of damping device or the cooling supply stream F leaves the end plate 10 into the combustion chamber 3.

As can be observed from Figure 6, alternative ways to route the cooling supply stream F through the end plate 10 are feasible. The common idea is to have straight second passages that connect the various feed and exit plena (12, 15 and 16).

The small cooling mass flow (due to the high pressure drop over the near-wall cooling device) is used efficiently to pick up the heat load from the combustion chamber 3. As the design of the near-wall cooling device covers the end plate 10 completely, the wall temperature distribution is homogeneous. A homogenous temperature distribution reduces the thermal stresses and increases the lifetime.

It is an advantage of this structure that all feed plena and passages of the near-wall cooling device can be made by drilling, laser cut, water jet, milling and so on. Up to date, the realization of such a cooling technique requires expensive casting processes (including ceramic cores) or brazing techniques, which are difficult to handle. The advantage of the current invention is that it uses only machining and welding techniques.

### List of Reference Numerals

- 1: combustor
- 2: burner section
- 2a: front plate
- 3: combustion chamber
- 4: wall
- 5: inner wall, liner
- 6: outer wall, cover plate
- 7: cooling channels
- 8: fixation clips
- 9: damping volume
- 10: end plate
- 11: feeding passage for supplying cooling medium to 12
- 12: first feed plenum
- 13: neck passage of the acoustic damping device
- 14: passage for cooling medium, near wall cooling channel
- 15: second feed plenum
- 16: exit plenum
- F: cooling medium
- G: hot gas

## Claims

1. Damping device for a gas turbine combustor (1), comprising a wall (4) with a first inner wall (5) and a second outer wall (6), arranged in a distance to each other, wherein said inner wall (5) is subjected to high temperatures on a side with a hot gas flow, a plurality of cooling channels (7) extending essentially parallel between the first inner wall (5) and the second outer wall (6), and at least one damping volume (9) bordered by cooling channels (7), a first passage (11) for supplying a cooling medium from a cooling channel (7) into the damping volume (9) and a neck passage (13) for connecting the damping volume (9) to the combustion chamber (3), **characterized in that** an end plate (10) is fixed to the inner wall (5), separating the damping volume (9) from the combustion chamber (3), said end plate (10) is provided with the neck passage (13), and is additionally provided with at least one feed plenum (12, 15) for the cooling medium, at least one exit plenum (16) for the cooling medium and at least one cooling passage (14) enabling a flow of cooling medium from the at least one first feed plenum (12) to a second feed plenum (15) or to the at least one exit plenum (16).

2. Damping device according to claim 1, **characterized in that** said the least one cooling passage (14) acts as a near wall cooling channel.

3. Damping device according to claim 2, **characterized in that** end plate (10) comprises a plurality of near wall cooling channels (14).

4. Damping device according to claim 3, **characterized in that** the near wall cooling channels (14) have essentially the same cross-section.

5. Damping device according to claim 1 or 2, **characterized in that** at least one feed plenum (12) communicates via feeding passage (11) in wall (5) with a cooling channel (7).

6. Damping device according to claim 1 or 2, **characterized in that** at least two feed plena (12, 15) are connected in series by one or more cooling passages (14).

7. Damping device according to claim 6, **characterized in that** at least three feed plena (12, 15) are connected in series.

8. Damping device according to claim 6 or 7, **characterized in that** consecutive plena (12, 15, 16) are arranged at different lateral edges of the end plate (10).

9. Damping device according to claim 8, **characterized in that** consecutive plena (12, 15, 16) are arranged at opposite edges of the end plate (10).

10. Damping device according to claim 9, **characterized in that** cooling passages (14) run parallel.

11. Damping device according to claim 1 or 2, **characterized in that** the at least one exit plenum (16) communicates with either the damping volume (9) or the combustion chamber (3).

12. Damping device according to claim 1, **characterized in that** the lateral edges of the end plate (10) are provided with recesses, and in interaction with the connected inner wall (5) these recesses form the plena (12, 15, 16).

13. Damping device according to one of the claims 1-12, **characterized in that** end plate (10) is fixed to the inner wall (5) by welding.

14. Damping device according to one of the claims 1-13, **characterized in that** the inner wall (5) is a liner of a gas turbine combustor (1).

15. Damping device according to one of claims 1-14, **characterized in that** wall (4) comprises more than one individual damping volumes (9).

16. Damping device according to claim 15, **characterized in that** the more than one individual damping volumes (9) are arranged in axial direction (in relation to the combustor axis).

17. Damping device according to claim 15 or 16, **characterized in that** individual damping volumes (9) have different parameters.

## Patentansprüche

1. Dämpfvorrichtung für eine Gasturbinenbrennkammer (1), aufweisend eine Wand (4) mit einer ersten Innenwand (5) und einer zweiten Außenwand (6), die in einem Abstand voneinander angeordnet sind, wobei die Innenwand (5) hohen Temperaturen auf einer Seite mit einem Heißgasstrom ausgesetzt ist, mehreren Kühlkanälen (7), die sich im Wesentlichen parallel zwischen der ersten Innenwand (5) und der zweiten Außenwand (6) erstrecken, und mindestens einem Dämpfungsvolumen (9), das von den Kühlkanälen (7) eingefasst ist, einen ersten Durchgang (11) zum Zuführen eines Kühlmittels von einem Kühlkanal (7) in das Dämpfungsvolumen (9) und einen Halsdurchgang (13) zum Verbinden des Dämpfungsvolumens (9) mit der Brennkammer (3), **dadurch gekennzeichnet, dass** eine Endplatte (10) an der Innenwand (5) befestigt ist, die das Dämpfungsvolumen (9) von der Brennkammer (3) trennt, wobei die Endplatte (10) mit dem Halsdurchgang (13) versehen ist und zusätzlich mit mindestens einem Zuführplenum (12, 15) für das Kühlmittel, mindestens einem Auslassplenum (16) für das Kühlmittel und mindestens einem Kühldurchgang (14), der einen Kühlmittelstrom von dem mindestens einen ersten Zuführplenum (12) zu einem zweiten Zuführplenum (15) oder zu dem mindestens einen Auslassplenum (16) bereitstellt.

2. Dämpfvorrichtung nach Anspruch 1, **dadurch gekennzeichnet, dass** der mindestens eine Kühldurchgang (14) als wandnaher Kühlkanal fungiert.

3. Dämpfvorrichtung nach Anspruch 2, **dadurch gekennzeichnet, dass** die Endplatte (10) mehrere wandnahe Kühlkanäle (14) aufweist.

4. Dämpfvorrichtung nach Anspruch 3, **dadurch gekennzeichnet, dass** die wandnahen Kühlkanäle (14) im Wesentlichen den gleichen Querschnitt aufweisen.

5. Dämpfvorrichtung nach Anspruch 1 oder 2, **dadurch gekennzeichnet, dass** mindestens ein Zuführplenum (12) über den Zuführdurchgang (11) in der Wand (5) mit einem Kühlkanal (7) kommuniziert.

6. Dämpfvorrichtung nach Anspruch 1 oder 2, **dadurch gekennzeichnet, dass** mindestens zwei Zuführplena (12, 15) durch einen oder mehrere Kühldurchgänge (14) in Serie verbunden sind.

7. Dämpfvorrichtung nach Anspruch 6, **dadurch gekennzeichnet, dass** mindestens drei Zuführplena (12, 15) in Serie verbunden sind.

8. Dämpfvorrichtung nach Anspruch 6 oder 7, **dadurch gekennzeichnet, dass** aufeinander folgende Plena (12, 15, 16) an verschiedenen Seitenkanten der Endplatte (10) angeordnet sind.

9. Dämpfvorrichtung nach Anspruch 8, **dadurch gekennzeichnet, dass** aufeinander folgende Plena (12, 15, 16) an gegenüberliegenden Kanten der Endplatte (10) angeordnet sind.

10. Dämpfvorrichtung nach Anspruch 9, **dadurch gekennzeichnet, dass** die Kühldurchgänge (14) parallel verlaufen.

11. Dämpfvorrichtung nach Anspruch 1 oder 2, **dadurch gekennzeichnet, dass** das mindestens eine Auslassplenum (16) mit entweder dem Dämpfungsvolumen (9) oder der Brennkammer (3) kommuniziert.

12. Dämpfvorrichtung nach Anspruch 1, **dadurch gekennzeichnet, dass** die Seitenkanten der Endplatte (10) mit Aussparungen bereitgestellt sind, und in Zusammenwirken mit der verbundenen Innenwand (5) bilden diese Aussparungen die Plena (12, 15, 16).

13. Dämpfvorrichtung nach einem der Ansprüche 1 bis 12, **dadurch gekennzeichnet, dass** die Endplatte (10) durch Schweißen an der Innenwand (5) befestigt ist.

14. Dämpfvorrichtung nach einem der Ansprüche 1 bis 13, **dadurch gekennzeichnet, dass** die Innenwand (5) eine Auskleidung einer Gasturbinenbrennkammer (1) ist.

15. Dämpfvorrichtung nach einem der Ansprüche 1 bis 14, **dadurch gekennzeichnet, dass** die Wand (4) mehr als ein einzelnes Dämpfungsvolumen (9) aufweist.

16. Dämpfvorrichtung nach Anspruch 15, **dadurch gekennzeichnet, dass** die mehr als ein einzelnes Dämpfungsvolumen (9) in axialer Richtung (bezogen auf die Brennkammerachse) angeordnet sind.

17. Dämpfvorrichtung nach Anspruch 15 oder 16, **dadurch gekennzeichnet, dass** einzelne Dämpfungsvolumen (9) unterschiedliche Parameter aufweisen.

## Revendications

1. Dispositif d'amortissement pour une chambre de combustion de turbine à gaz (1), comprenant une paroi (4) présentant une première paroi intérieure (5) et une deuxième paroi extérieure (6), agencées à distance l'une de l'autre, dans lequel ladite paroi intérieure (5) est soumise à des températures élevées sur un côté avec un écoulement de gaz chaud, une pluralité de canaux de refroidissement (7) qui s'étendent de façon essentiellement parallèle entre la première paroi intérieure (5) et la deuxième paroi extérieure (6), et au moins un volume d'amortissement (9) bordé par des canaux de refroidissement (7), un premier passage (11) pour fournir un milieu de refroidissement à partir d'un canal de refroidissement (7) dans le volume d'amortissement (9), et un passage de goulot (13) pour connecter le volume d'amortissement (9) à la chambre de combustion (3), **caractérisé en ce qu'**une plaque d'extrémité (10) est fixée à la paroi intérieure (5), séparant le volume d'amortissement (9) de la chambre de combustion (3), ladite plaque d'extrémité (10) étant pourvue du passage de goulot (13), et étant additionnellement pourvue d'au moins un plénum d'alimentation (12, 15) pour le milieu de refroidissement, d'au moins un plénum de sortie (16) pour le milieu de refroidissement, et d'au moins un passage de refroidissement (14) pour permettre un écoulement du milieu de refroidissement à partir dudit au moins un premier plénum d'alimentation (12) jusqu'à à un deuxième plénum d'alimentation (15) ou jusqu'audit au moins un plénum de sortie (16).

2. Dispositif d'amortissement selon la revendication 1, **caractérisé en ce que** ledit au moins un passage de refroidissement (14) agit comme un canal de refroidissement proche de la paroi.

3. Dispositif d'amortissement selon la revendication 2, **caractérisé en ce que** la plaque d'extrémité (10) comprend une pluralité de canaux de refroidissement proches de la paroi (14).

4. Dispositif d'amortissement selon la revendication 3, **caractérisé en ce que** les canaux de refroidissement proches de la paroi (14) présentent essentiellement la même section transversale.

5. Dispositif d'amortissement selon la revendication 1 ou 2, **caractérisé en ce qu'**au moins un plénum d'alimentation (12) communique par l'intermédiaire d'un passage d'alimentation (11) dans la paroi (5) avec un canal de refroidissement (7).

6. Dispositif d'amortissement selon la revendication 1 ou 2, **caractérisé en ce qu'**au moins deux plénums d'alimentation (12, 15) sont connectés en série par un ou plusieurs passage(s) de refroidissement (14).

7. Dispositif d'amortissement selon la revendication 6, **caractérisé en ce qu'**au moins trois plénums d'alimentation (12, 15) sont connectés en série.

8. Dispositif d'amortissement selon la revendication 6 ou 7, **caractérisé en ce que** des plénums consécutifs (12, 15, 16) sont agencés à différents bords latéraux de la plaque d'extrémité (10).

9. Dispositif d'amortissement selon la revendication 8, **caractérisé en ce que** des plénums consécutifs (12, 15, 16) sont agencés à des bords opposés de la plaque d'extrémité (10).

10. Dispositif d'amortissement selon la revendication 9, **caractérisé en ce que** les passages de refroidissement (14) sont parallèles.

11. Dispositif d'amortissement selon la revendication 1 ou 2, **caractérisé en ce qu'**au moins un plénum de sortie (16) communique soit avec le volume d'amortissement (9), soit avec la chambre de combustion (3).

12. Dispositif d'amortissement selon la revendication 1, **caractérisé en ce que** les bords latéraux de la plaque d'extrémité (10) comportent des renfoncements, et en interaction avec la paroi intérieure connectée (5), ces renfoncements forment les plénums (12, 15, 16).

13. Dispositif d'amortissement selon l'une quelconque des revendications 1 à 12, **caractérisé en ce que** la plaque d'extrémité (10) est fixée à la paroi intérieure (5) par soudage.

14. Dispositif d'amortissement selon l'une quelconque des revendications 1 à 13, **caractérisé en ce que** la paroi intérieure (5) est une garniture d'une chambre de combustion de turbine à gaz (1).

15. Dispositif d'amortissement selon l'une quelconque des revendications 1 à 14, **caractérisé en ce que** la paroi (4) comprend plus d'un volume d'amortissement individuel (9).

16. Dispositif d'amortissement selon la revendication 15, **caractérisé en ce que** les plus d'un volume d'amortissement individuel (9) sont agencés dans une direction axiale (par rapport à l'axe de la chambre de combustion).

17. Dispositif d'amortissement selon la revendication 15 ou 16, **caractérisé en ce que** des volumes d'amortissement individuels (9) présentent des paramètres différents.
